# EUROPÄISCHE PATENTANMELDUNG

(11) **EP 2 138 717 A2**
(43) Veröffentlichungstag der Anmeldung: **30.12.2009**
(21) Anmeldenummer: 09163438.6
(22) Anmeldetag: 23.06.2009
(51) Int. Cl.: F03D 7/02, F03D 7/04

(54) **Verfahren zum Betreiben einer Windkraftanlage**

(30) Priorität: 25.06.2008 DE 102008031816
(71) Anmelder: Lange, Wilhelm, 4639 Kristiansand S. (NO)
(72) Erfinder: Lange, Wilhelm, 4639 Kristiansand S. (NO)
(74) Vertreter: Dreiss

(57) **Zusammenfassung**

Die Erfindung betrifft Verfahren zum Betreiben einer Windkraftanlage mit mindestens einem um eine parallel zu einer Anströmrichtung verlaufenden Achse rotierenden ersten Flügel und einer Steuereinrichtung mit folgenden Verfahrensschritte:
- Aufnehmen eines Messsignals durch Messen einer auf den mindestens einen ersten Flügel wirkenden Last;
- Filtern des Messsignals;
- Bestimmen von aktuellen Parametern des ersten Flügels, insbesondere von Drehgeschwindigkeit und räumlicher Lage des ersten Flügels;
- Berechnen eines Stellsignals zum Stellen des Flügels aus den aktuellen Parametern, dem Messsignal und einem in der Steuereinrichtung hinterlegten Datensatz;
- Berechnen einer Zeitverzögerung T, mit welcher ein nachlaufender Flügel die räumliche Lage des ersten Flügels bei Aufnehmen des Messsignals des ersten Flügels einnimmt;
- Ändern der Auftriebskraft des nachlaufen Flügels durch Ansteuern des nachlaufenden Flügels in Abhängigkeit von Stellsignal und Zeitverzögerung T, so dass schädigende dynamische Lastanteile minimiert werden.

## Beschreibung

Die Erfindung betrifft ein Verfahren zum Betreiben einer Windkraftanlage mit mindestens einem im Wesentlichen um eine parallel zu einer Anströmrichtung verlaufenden Achse rotierenden ersten Flügel und einer Steuereinrichtung. Darüber hinaus betrifft die Erfindung eine Windkraftanlage sowie einen Flügel für eine Windkraftanlage.

Verfahren zum Betreiben einer Windkraftanlage sind bekannt. Die Windkraftanlage besitzt einen oder mehrere Flügel, die mittels der Steuereinrichtung bezüglich ihres Anstellwinkels gegenüber der Anströmrichtung des Windes verstellbar sind. Dabei sind die verschiedene Anströmgeschwindigkeiten des Windes verschiedenen Anstellwinkeln der Flügel zugeordnet, um eine größtmögliche Energieausbeute zu erzielen. Die bekannten Windkraftanlagen sind für eine Betriebszeit von zwanzig Jahren ausgelegt. Eine wesentliche Einflussgröße auf die Lebensdauer einer Windkraftanlage ist der Standort der Windkraftanlage, insbesondere ob die Windkraftanlage in Küstennähe, in urbanem Gelände oder in einem Windpark aufgestellt ist. An den jeweiligen Standorten herrschen in mittlerer Anströmgeschwindigkeit und Turbulenz abweichende Winde vor, die sich demgemäß unterschiedlich auf Ertrag, Lebensdauer und Gesamtertrag auswirken. Hierbei bestimmen Intensitäten und Frequenzen der Wechselamplituden des Windes maßgeblich die Lebensdauer einer Windkraftanlage und den zeitlichen Abstand von Inspektionen derselben.

Der vorliegenden Erfindung liegt die Aufgabe zugrunde, ein Verfahren anzugeben, bei dem die Lebensdauer einer Windkraftanlage erhöht ist.

Diese Aufgabe wird bei einem Verfahren der eingangs genannten Art erfindungsgemäß durch die Verfahrensschritte des Anspruchs 1 gelöst.

Durch das Aufnehmen eines Messsignals wird die aktuell auf den ersten Flügel wirkende Last ermittelt. Dabei kann es sich bei der Last um eine ungestörte Anströmung oder aber um eine störungsbehaftete turbulente Anströmung handeln. Es ist denkbar, dass das Messsignal im Vorlauf oder im Rücklauf der Anströmung des ersten Flügels gemessen wird, bevorzugt wird jedoch ein Aufnehmen des Messsignals direkt am ersten Flügel.

Das Filtern des Messsignals kann direkt beim Aufnehmen des Messsignals oder in der Steuereinrichtung erfolgen.

Die aktuellen Parameter des Flügels umfassen insbesondere die Drehgeschwindigkeit und die räumliche Lage des ersten Flügels. Durch das Bestimmen der räumlichen Lage des ersten Flügels wird mit diesem Messen der exakten Positionierung des ersten Flügels im Raum bestimmt, an welcher Stelle das Messsignal aufgenommen wurde. Dadurch ist neben dem Betrag der Last auch der Richtungsvektor der Last bestimmbar.

Die aktuellen Parameter können darüber hinaus auch Informationen über die aktuelle Flügelfläche und einen Anstellwinkel des ersten Flügels bezüglich der Anströmrichtung umfassen.

Der nachlaufende Flügel wird in Abhängigkeit des Stellsignals und der Zeitverzögerung T so angesteuert, dass er durch die von ihm erzeugte Auftriebskraft der zu erwartenden Last im Wesentlichen entgegenwirkt. Dadurch ist die auf den Flügel wirkende Last und auch die Last auf mit dem Flügel zusammenwirkende Komponenten der Windkraftanlage reduziert, so dass die Lebensdauer der Windkraftanlage erhöht ist.

Es erweist sich als vorteilhaft, wenn die Last mittels eines Dehnungsmessstreifens (DMS) gemessen wird. Bei dem Flügel handelt es sich vorzugsweise um einen linear elastischen Körper. Bei einem solchen existiert ein eindeutiger und auch umgekehrt eindeutiger Zusammenhang zwischen Dehnung und Spannung sowie auch zwischen Spannung und auf den Körper angreifende Kräfte und Momente. Dadurch ist es möglich, mittels nur eines DMS, die Last auf einfache und kostengünstige Weise zu messen.

In Weiterbildung zu vorgenannten Erfindungsgedanken wird die Last durch mindestens eine DMS-Rosette und/oder sechs linear unabhängige Dehnungsmessstreifen gemessen. Mittels einer DMS-Rosette ist es möglich, einen räumlichen Kraftvektor zu erfassen. Über die Verwendung von sechs linear unabhängigen DMS ist es möglich, neben dem räumlichen Kraftvektor auch den räumlichen Momentenvektor zu erfassen, wodurch das Verfahren optimiert ist.

Darüber hinaus hat es sich als vorteilhaft erwiesen, wenn die Last über eine Geräuschmessung gemessen wird. Hierbei kann die Last entweder durch die Geräuschmessung allein gemessen werden oder durch eine Kombination aus Geräuschmessung und der Messung über Dehnungsmessstreifen.

In Weiterbildung der Erfindung wird das Messsignal, durch einen Hochpassfilter gefiltert, wobei es sich als vorteilhaft erweist, wenn das Messsignal in statische und dynamische Anteile gefiltert wird. Dadurch ist die Datenmenge auf den Anteil der Last reduziert, der sich im Wesentlichen nachteilig auf die Lebensdauer der Windkraftanlage auswirkt. Durch das Reduzieren der Datenmenge ist eine schnelle Verarbeitung gewährleistet.

Es erweist sich ferner als vorteilhaft, wenn eine harmonische Analyse des Messsignals durchgeführt wird. Bei der harmonischen Analyse des Messsignals wird die Last in ihre verschiedenen harmonischen Lastkomponenten, insbesondere in die Intensität und Frequenz der Last, aufgegliedert. Dadurch ist es möglich, die Hauptlastkomponenten zu bestimmen und das Stellsignal dahingehend auszubilden, dass diesen Hauptlastkomponenten durch Ansteuern des Flügels entgegengewirkt wird. Hierdurch ist die Effizienz des Verfahrens weiter erhöht.

In Weiterbildung letztgenannten Erfindungsgedankens ist vorgesehen, dass die harmonische Analyse eine schnelle Fourier Analyse umfasst. Durch die schnelle Fourier Analyse werden die Frequenzen und Intensitäten der Hauptlastkomponenten ermittelt. Damit liegen dann die Lasten auf die einzelnen Flügel, insbesondere des ersten Flügels, nach Amplitude und Phasenwinkel vor, wodurch durch das Stellsignal gezielt störende dynamische Lasten kompensiert werden.

In Weiterbildung der Erfindung ist als Datensatz ein Dynamikmodell verfügbar. Das Dynamikmodell erlaubt, die Auftriebskraft des nachlaufenden Flügels zu berechnen und das Verhalten des nachlaufenden Flügels zu simulieren, um ein geeignetes Stellsignal zum Entgegenwirken der dynamischen Last zu ermitteln. Als Folge stellt sich dann eine nahezu statische Last ein. Im Allgemeinen kann natürlich nicht gleichzeitig eine vollkommende Kompensation von dynamischen Lasten aus der Schubkraft und gleichzeitig den dynamische Lasten aus dem Drehmoment der Nabe erwartet werden. Je nach Bedeutung und Schädigungseinfluss kann eine gewichtete Kompensation im Datensatz der Steuereinrichtung hinterlegt sein.

Ferner wird bei einer Ausführungsform des Verfahrens die Auftriebskraft des nachlaufenden Flügels durch eine Änderung des Anstellwinkels, bezüglich der Anströmrichtung des Windes, mindestens eines Bereichs des nachlaufenden Flügels verändert. Durch die Veränderung des Anstellwinkels kann die Auftriebskraft erhöht oder reduziert werden. Dadurch, dass verschiedenen Bereiche des Flügels angesteuert werden können, ist es möglich, mit einem bestimmten Bereich des Flügels einer bestimmten harmonischen Last entgegenzuwirken.

In Weiterbildung letztgenannten Erfindungsgedankens weist der nachlaufende Flügel mindestens zwei Bereiche auf, deren Anstellwinkel bezüglich der Anströmrichtung unabhängig voneinander verändert werden. Die beiden Bereiche des Flügels sind also unabhängig voneinander um eine radial verlaufende Achse der Windkraftanlage drehbar angeordnet. Von besonderem Vorteil dabei ist, dass im Falle von niedrigen harmonischen Lasten lediglich nur ein Bereich des Flügels bezüglich seines Anstellwinkels verändert werden muss, wodurch ein schnelles Verstellen ermöglich ist.

Darüber hinaus erweist es sich als vorteilhaft, wenn die Auftriebskraft durch ein Verändern der Flügelfläche verändert wird. Hierbei kann die Flügelfläche vergrößert oder verkleinert werden.

Ferner wird bei einer Weiterbildung die Flügelfläche bei schwacher Anströmung und/oder bei geringen dynamischen Lasten vergrößert und bei starker Anströmung und/oder bei hohen dynamischen Lasten reduziert. Dadurch wird die Energieausbeute der Windkraftanlage gesteigert.

Schließlich erweist es sich als vorteilhaft, wenn das Stellsignal ein Notsignal umfasst und den Flügel quer zur Anströmrichtung verstellt. Dadurch wird der Flügel abgebremst und ist im Wesentlichen auftriebsfrei.

Darüber hinaus wird zur Lösung der Aufgabe eine Windkraftanlage mit mindestens einem motorisch ansteuerbaren Flügel und einer Steuereinrichtung vorgeschlagen, die sich dadurch auszeichnet, dass die Steuereinrichtung so ausgebildet ist, dass mit ihr das Verfahren nach einem der Ansprüche 1 bis 12 durchführbar ist.

Schließlich wird ein Flügel für eine Windkraftanlage vorgeschlagen, der einen Hauptflügel und einen Blattspitzenflügel aufweist, der sich dadurch auszeichnet, dass der Hauptflügel und der Blattspitzenflügel unabhängig voneinander hinsichtlich radialer Erstreckung und Anstellwinkel ansteuerbar sind. Der Hauptflügel ist dabei radial innen in der Nähe der Drehachse angeordnet und der Blattspitzenflügel radial außen an den Hauptflügel anschließend angeordnet. Hauptflügel und Blattspitzenflügel können durch einen Spalt von einander beabstandet sein.

Bevorzugt wird allerdings eine Ausführungsform, bei der Hauptflügel und Blattspitzenflügel formschlüssig ineinander übergehen.

Hauptflügel und Blattspitzenflügel können über denselben Motor angesteuert werden. Bevorzugt wird allerdings eine Ausführungsform, bei der dem Hauptflügel ein erster Stellmotor und dem Blattspitzenflügel ein zweiter Stellmotor funktionell zugeordnet ist. Erster Stellmotor und zweiter Stellmotor sind dabei so ausgebildet, dass sie den jeweils zugeordneten Flügel bezüglich radialer Erstreckung und Anstellwinkel ansteuern können.

Erster Stellmotor und zweiter Stellmotor können radial innen, beispielsweise an einer Nabe der Windkraftanlage, angeordnet sein. Es erweist sich allerdings als vorteilhaft, wenn der zweite Stellmotor im Hauptflügel angeordnet ist. Dadurch ist der Antriebsstrang verkürzt und der zweite Stellmotor kann kompakt ausgebildet werden.

In Weiterbildung der Erfindung ist der Flügel in radialer Richtung verlängerbar. Beispielsweise kann ein Bereich des Hauptflügels in der Nabe der Windkraftanlage angeordnet sein und durch den ersten Stellmotor in radialer Richtung aus- und einfahrbar sein. Bevorzugt wird eine Ausführungsform, bei der der Blattspitzenflügel in radialer Richtung bewegbar ist.

Dabei kann der Blattspitzenflügel beispielsweise nach radial außen unter Beabstandung zum Hauptflügel bewegt werden. Allerdings wird eine Ausführungsform bevorzugt, bei der der Blattspitzenflügel teleskopartig in den Hauptflügel ein- und ausfahrbar ist. Hierdurch wird erreicht, dass störende Strömungseffekte reduziert werden.

Weitere Merkmale, Einzelheiten und Vorteile der Erfindung ergeben sich aus den beigefügten Patentansprüchen und der zeichnerischen Darstellung und nachfolgenden Beschreibung bevorzugter Ausführungsformen der Erfindung. In der Zeichnung zeigen:

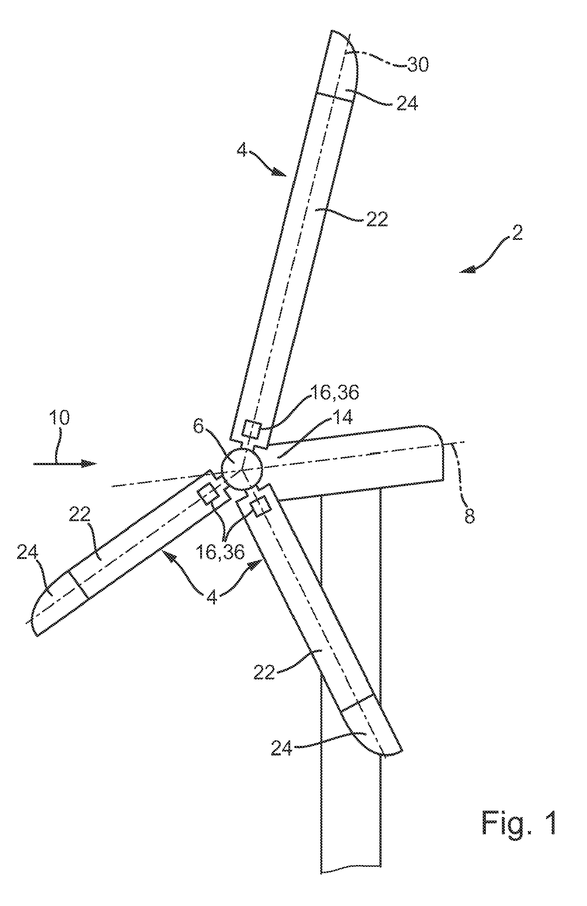

- Figur 1: ein schematische Darstellung einer erfindungsgemäßen Windkraftanlage;
- Figur 2: eine Draufsicht auf einen erfindungsgemäßen Flügel;
- Figur 3: eine schematische Darstellung des erfindungsgemäßen Verfahrens.

Die Figuren zeigen eine Windkraftanlage 2 beziehungsweise einen Bereich einer Windkraftanlage 2, mit Flügeln 4. Bei den in den Figuren gezeigten Ausführungsbeispielen umfasst die Windkraftanlage 2 drei Flügel 4. Die Flügel 4 rotieren dabei mit einer Nabe 6 um eine Achse 8. Die Achse 8 verläuft dabei im Wesentlichen parallel zu einer Anströmrichtung 10. An dem Flügel 4 sind Dehnungsmessstreifen 16 angeordnet, mittels derer ein Messsignal 18 aus der auf den Flügel 4 wirkenden Last aufgenommen wird. Bei den Dehnungsmessstreifen 16 kann es sich dabei insbesondere um eine DMS-Rosette 36 handeln.

Über die Steuereinrichtung 14 werden die aktuellen Parameter des Flügels 4 bestimmt, insbesondere die Drehgeschwindigkeit und die räumliche Lage des Flügels 4. Darüber hinaus filtert die Steuereinrichtung 14 das Messsignal 18 derart, dass Informationen über die statische Last herausgefiltert werden. Aus der verbleibenden dynamischen Last sowie aus den aktuellen Parametern berechnet die Steuereinrichtung 14 ein Stellsignal 20 sowie eine Zeitverzögerung T, mit der sie einen nachlaufenden Flügel 4 so ansteuert, dass die betreffende Auftriebskraft der zu erwartenden Last entgegenwirkt. Als Folge stellt sich dann eine nahezu statische Last ein. Hierbei kommt es zu einer teilweisen Kompensation von dynamischen Lasten aus der Schubkraft und den dynamische Lasten aus dem Drehmoment der Nabe 6. Je nach Bedeutung und Schädigungseinfluss kann eine gewichtete Kompensation im Datensatz 40 der Steuereinrichtung 14 hinterlegt sein.

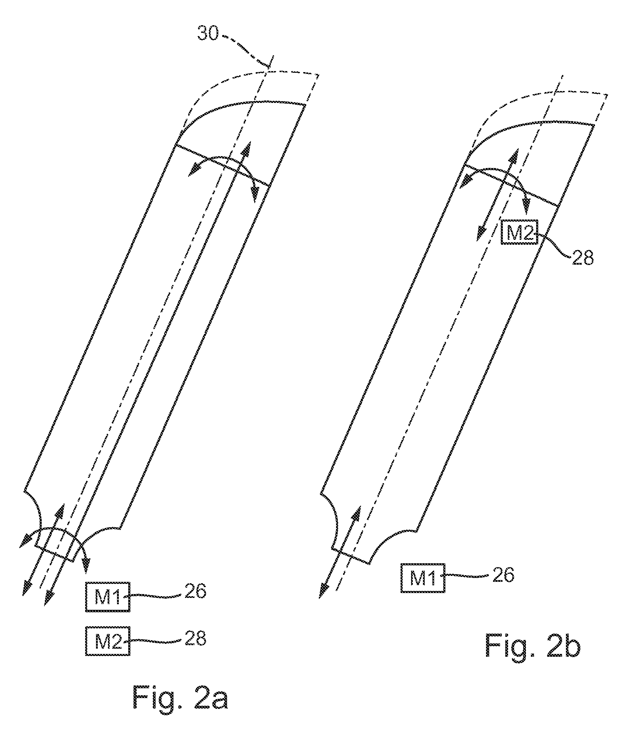

Der Flügel 4 weist einen Hauptflügel 22 und einen Blattspitzenflügel 24 auf. Dem Hauptflügel 22 ist ein erster Stellmotor 26 und dem Blattspitzenflügel 24 ein zweiter Stellmotor 28 funktionell zugeordnet. Über die Steuereinrichtung 14 können Hauptflügel 22 und Blattspitzenflügel 24 mittels des ersten Stellmotors 26 und des zweiten Stellmotors 28 um eine radial verlaufende Drehachse 30 bezüglich ihres Anstellwinkels gegenüber der Anströmrichtung 10 verstellt werden. Darüber hinaus ist es mittels des ersten Stellmotors 26 möglich, den Hauptflügel 22 entlang der radial verlaufenden Drehachse 30 linear zu verschieben. Insbesondere in den Figuren 2a und 2b ist gezeigt, dass der Blattspitzenflügel 24 teleskopartig aus dem Hauptflügel 22 in radialer Richtung verschiebbar ist.

Zur Veränderung der Auftriebskraft eines Flügels 4 stehen folgende Möglichkeiten zur Verfügung:

Vergrößerung des Flügels 4 durch Vergrößern der Fläche des Hauptflügels 22 und/oder durch radiales Verschieben des Blattspitzenflügels 24. Darüber hinaus kann die Auftriebskraft durch eine Veränderung des Anstellwinkels sowohl des Hauptflügels 22 als auch des Blattspitzenflügels 24 bewirkt werden.

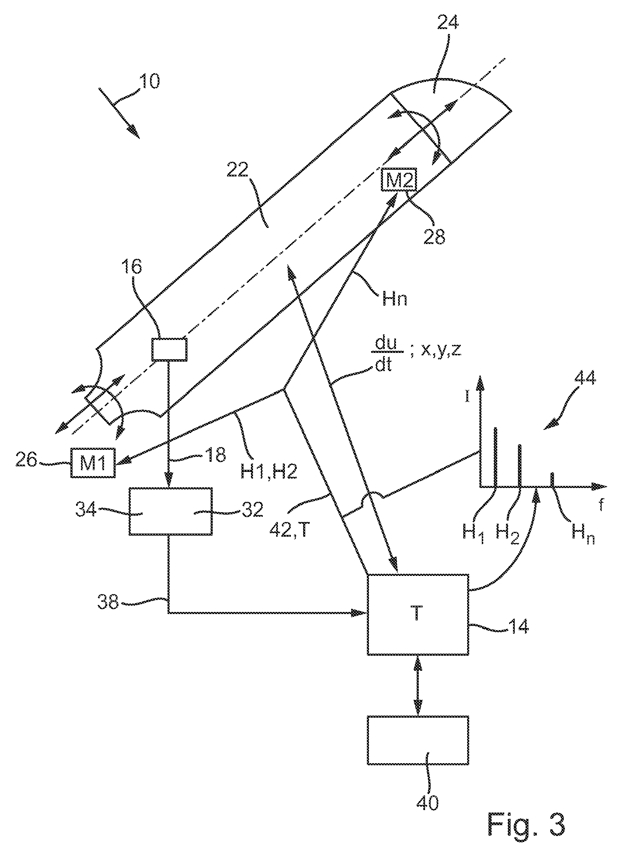

Das erfindungsgemäße Verfahren wird anhand eines schematischen Blockschaltbilds gemäß Figur 3 erläutert:

Zunächst wird ein Messsignal 18 über die Dehnungsmessstreifen 16 aufgenommen und mittels eines Filters 32 gefiltert. Bei dem Filter 32 handelt es sich insbesondere um einen Hochpassfilter 34, mittels dem die statischen Anteile des Messsignals 18 herausgefiltert werden.

Ein so gewonnene modifizierte Messsignal 38 wird an die Steuereinrichtung 14 übergeben. Die Steuereinrichtung 14 bestimmt die aktuellen Parameter des Flügels 4, insbesondere die Drehgeschwindigkeit du/dt und die räumliche Lage x,y,z des Flügels 4. Darüber hinaus ermittelt die Steuereinrichtung 14 aus Drehgeschwindigkeit du/dt und räumlicher Lage x,y,z eine Zeitverzögerung T, die von einem nachlaufenden Flügel benötigt wird, um die räumliche Lage x,y,z des Flügels 4 einzunehmen. Aus den aktuellen Parametern, dem modifizierten Messsignal 38 und einem in der Steuereinrichtung hinterlegten Datensatz 40, wird ein Stellsignal 42 mittels der Steuereinrichtung 14 berechnet, mit welchen in Verbindung mit der Zeitverzögerung T der erste Stellmotor 26 beziehungsweise der zweite Stellmotor 28 angesteuert wird.

In der Steuereinrichtung 14 wird das modifizierte Messsignal 38 mittels einer harmonischen Analyse 44 in verschiedene harmonische Lasten H1, H2,... Hn aufgeteilt. Entsprechend den harmonischen Lasten wird über das Stellsignal 42 der erste Stellmotor 26 beziehungsweise der zweite Stellmotor 28 so angesteuert, dass der entsprechend zu erwartenden Last entgegengewirkt werden kann.

In Figur 3 beispielhaft dargestellt, wird durch Ansteuern des ersten Stellmotors 26 den harmonischen Lasten H1 und H2 entgegengewirkt. Das Entgegenwirken kann dann eine Änderung des Anstellwinkels bezüglich der Windrichtung 10 oder eine Längenveränderung des Hauptflügels 22 umfassen. Durch Ansteuern des zweiten Stellmotors 28 wirkt der Blattspitzenflügel durch Ändern seine Anstellwinkels bezüglich der Windrichtung 10 oder durch Ändern seiner Fläche den harmonischen Lasten Hn entgegen.

## Patentansprüche

1. Verfahren zum Betreiben einer Windkraftanlage (2) mit mindestens einem im wesentlichen um eine parallel zu einer Anströmrichtung (10) verlaufenden Achse rotierenden ersten Flügel (4) und einer Steuereinrichtung (14), **gekennzeichnet durch** folgende Verfahrensschritte:
- Aufnehmen eines Messsignals (18) **durch** Messen einer auf den mindestens einen ersten Flügel (4) wirkenden Last;
- Filtern des Messsignals (18);
- Bestimmen von aktuellen Parametern des ersten Flügels (4), insbesondere von Drehgeschwindigkeit du/dt und räumlicher Lage x,y,z des ersten Flügels (4) ;
- Berechnen eines Stellsignals (20) zum Stellen des Flügels (4) aus den aktuellen Parametern, dem Messsignal (18) und einem in der Steuereinrichtung (14) hinterlegten Datensatz (40);
- Berechnen einer Zeitverzögerung T, mit welcher ein nachlaufender Flügel (4) die räumliche Lage x,y,z des ersten Flügels (4) bei Aufnehmen des Messsignals (18) des ersten Flügels (4) einnimmt;
- Ändern der Auftriebskraft des nachlaufen Flügels (4) **durch** Ansteuern des nachlaufenden Flügels (4) in Abhängigkeit von Stellsignal (20) und Zeitverzögerung T.

2. Verfahren nach Anspruch 1, **dadurch gekennzeichnet, dass** die Last mittels mindestens eines Dehnungsmessstreifens (DMS) (16), mindestens eine DMS-Rosette (36) und/oder 6 linear unabhängige Dehnungsmessstreifen (16) und/oder über eine Geräuschmessung gemessen wird.

3. Verfahren nach einem der vorhergehenden Ansprüche, **dadurch gekennzeichnet, dass** das Messsignal (18) durch einen Hochpassfilter (34) und/oder in statische und dynamische Anteile gefiltert wird.

4. Verfahren nach einem der vorhergehenden Ansprüche, **dadurch gekennzeichnet, dass** eine harmonische Analyse (44) des Messsignals (18) durchgeführt wird und insbesondere zur harmonischen Analyse (44) eine schnelle Fourier Analyse durchgeführt wird.

5. Verfahren nach einem der vorhergehenden Ansprüche, **dadurch gekennzeichnet, dass** als Datensatz (40) ein Dynamikmodell verfügbar ist, welches das Übertragungsverhalten von Stellsignal und dynamischer Auftriebskraft abbildet.

6. Verfahren nach einem der vorhergehenden Ansprüche, **dadurch gekennzeichnet, dass** die Auftriebskraft des nachlaufenden Flügels (4) durch eine Änderung des Anstellwinkels bezüglich der Anströmrichtung (10) mindestens eines Bereichs des nachlaufenden Flügels (4) verändert wird.

7. Verfahren nach Anspruch 6, **dadurch gekennzeichnet, dass** der nachlaufende Flügel (4) mindestens zwei Bereiche aufweist, deren Anstellwinkel bezüglich der Anströmrichtung (10) unabhängig voneinander verändert werden.

8. Verfahren nach einem der vorhergehenden Ansprüche, **dadurch gekennzeichnet, dass** die Auftriebskraft durch ein Verändern der Flügelfläche verändert wird.

9. Verfahren nach einem der vorhergehenden Ansprüche, **dadurch gekennzeichnet, dass** die Flügelfläche bei schwacher Anströmung und/oder bei geringen dynamischen Lasten vergrößert wird und bei starker Anströmung und/oder bei hohen dynamischen Lasten reduziert wird.

10. Verfahren nach einem der vorhergehenden Ansprüche, **dadurch gekennzeichnet, dass** das Stellsignal ein Notsignal umfasst und den Flügel (4) und (24) quer zur Anströmrichtung (10) verstellt.

11. Windkraftanlage (2) mit mindestens einem motorisch ansteuerbaren Flügel (4) und einer Steuereinrichtung (14), **dadurch gekennzeichnet, dass** die Steuereinrichtung (14) so ausgebildet ist, dass mit ihr das Verfahren nach einem der vorhergehenden Ansprüche durchführbar ist.

12. Flügel (4) für eine Windkraftanlage (2), der einen Hauptflügel (22) und einen Blattspitzenflügel (24) aufweist, **dadurch gekennzeichnet, dass** der Hauptflügel (22) und der Blattspitzenflügel (24) unabhängig voneinander hinsichtlich radialer Erstreckung und Anstellwinkel ansteuerbar sind.

13. Flügel (4) nach Anspruch 12, **dadurch gekennzeichnet, dass** dem Hauptflügel (22) ein erster Stellmotor (26) und dem Blattspitzenflügel (24) ein zweiter Stellmotor (28) funktionell zugeordnet ist und insbesondere der zweite Stellmotor (28) im Hauptflügel (22) angeordnet ist.

14. Flügel (4) nach Anspruch 11 oder 13, **dadurch gekennzeichnet, dass** der Flügel (4), und insbesondere der Blattspitzenflügel (24), in radialer Richtung (30) verlängerbar ist.

15. Flügel (4) nach einem der Ansprüche 12 bis 14, **dadurch gekennzeichnet, dass** der Blattspitzenflügel (24) teleskopartig in den Hauptflügel (22) ein- und ausfahrbar ist.
